## Europäisches Patentamt

(19) **European Patent Office**

**Office européen des brevets**

(11) Veröffentlichungsnummer: **0 150 444**

**B1**

(12) **EUROPÄISCHE PATENTSCHRIFT**

(45) Veröffentlichungstag der Patentschrifft: **07.02.90**

(51) Int. Cl. 5: **C 08 G 18/10, C 08 G 18/76**

(21) Anmeldenummer: **84115821.5**

(22) Anmeldetag: **19.12.84**

(54) Verfahren zur Herstellung gemischter Polyurethan-Prepolymerer.

(30) Priorität: **14.01.84 DE 3401129**

(43) Veröffentlichungstag der Anmeldung:
**07.08.85 Patentblatt 85/32**

(45) Bekanntmachung des Hinweises auf die Patenterteilung:
**07.02.90 Patentblatt 90/06**

(84) Bennante Vertragsstaaten:
**AT BE CH DE FR GB IT LI LU NL SE**

(56) Entgegenhaltungen:
**EP-A-0 005 473**
**EP-A-0 019 120**
**EP-A-0 107 014**
**EP-A-0 118 065**
**GB-A-1 052 041**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Baurledel, Hans Dr.**
**Am Falder 101**
**D-4000 Düsseldorf 13 (DE)**

LIBERGRAF, STOCKHOLM 1990

EP 0 150 444 B1

## Beschreibung

Die Erfindung betrifft ein Verfahren zur Herstellung von Polyurethan-Prepolymeren mit Isocyanatendgruppen auf Basis von Diisocyanaten unterschiedlicher Reaktivität. Die Verfahrensprodukte zeichnen sich durch einen verminderten Gehalt an freien monomeren Diisocyanaten aus.

Polyurethan-Prepolymere mit Isocyanatendgruppen sind seit langem bekannt. Sie können mit geeigneten Härtern - meist mehrfunktionellen Alkoholen - in einfacher Weise zu Hochpolymeren umgesetzt werden. PolyurethanPrepolymere haben auf vielen Anwendungsgebieten Bedeutung erlangt, so bei Dichtungsmassen, Lacken und Klebstoffen.

Um Polyurethan-Prepolymere mit endständigen Isocyanatgruppen zu erhalten, ist es üblich, mehrfunktionelle Alkohole mit einem Überschuß an Diisocyanaten zur Reaktion zu bringen. Nach dem allgemeinen Fachwissen der Polymer-Chemie kann bei dieser Reaktion das mittlere Molekulargewicht zumindest näherungsweise über das Verhältnis von Hydroxylgruppen zu Isocyanatgruppen gesteuert werden. So entstehen bei einem Molverhältnis von genau 1 : 1 sehr hochmolekulare Produkte, während bei einem Molverhältnis OH : NCO = 1 : 2 im statistischen Mittel Addukte von 2 Molekülen Diisocyanat an 1 Molekül Diol entstehen. Aufgrund dieses Wissens ist es dem Fachmann möglich, Isocyanatendgruppen tragende Polyurethan-Prepolymere mit in weiten Grenzen variierbarem mittleren Molekulargewicht maßzuschneidern. Die entstehenden Produkte weisen jedoch, wie bei Polymeren üblich, eine mehr oder minder breite Molekulargewichtsverteilung auf. Insbesondere bleibt unabhängig von der Reaktionszeit am Reaktionsende eine gewisse Menge der im Überschuß eingesetzten Komponente unumgesetzt übrig. Dabei steigt der Gehalt an nicht umgesetzten Diisocyanaten - hier Restmonomeren genannt - mit dem Überschuß dieser Komponente im Reaktionsgemisch (vgl. H.G. Elias, Makromoleküle, Huthig & Wepf, Basel, 4. Auflage 1981, Seite 487 ff.).

Bei zahlreichen Anwendungen von Polyurethan-Prepolymeren wird ein Gehalt an Restmonomeren als störend empfunden. So erfordern flüchtige Diisocyanate, wie beispielsweise Toluylendiisocyanat besondere gewerbehygienische Vorsichtsmaßnahmen, selbst wenn sie in Mengen von nur 0,5 - 5 Gew.-% in den Prepolymeren vorhanden sind. Andererseits können nicht flüchtige Diisocyanate bei Verklebungen durch Migration zu Störungen führen. Derartige Störungen können z. B. beim Versiegeln verklebter Folienverbunde auftreten.

Zur Absenkung des Gehaltes an Restmonomeren wird in der nicht vorveröffentlichen EP-A-118 065 vorgeschlagen, aus einem monocyclischen Diisocyanat und einem mehrfunktionellen Alkohol ein niedrig viskoses Polyurethan-Prepolymer herzustellen und in diesem als Lösungsmittel oder Reaktivverdünner ein dicyclisches Diisocyanat mit einer Alkoholkomponente umzusetzen. Wenngleich nach diesem Verfahren monomerarme Polyurethan-Prepolymere gewonnen werden können, so besteht doch der Wunsch, unter Beibehaltung dieser Eigenschaft Produkte mit niederer Viskosität zur Verfügung zu haben.

Bereits in der britischen Patentschrift GB-1 052 041 wird vorgeschlagen, mehrfunktionelle Alkohole in einer ersten Reaktionsstufe mit Toluylendiisocyanat oder Hexamethylendiisocyanat zu einem Teilumsatz der Isocyanatgruppen reagieren zu lassen und dann in einer zweiten Reaktionsstufe 4,4'-Diphenylmethandiisocyanat oder 4,4'-Dicyclohexylmethandiisocyanat zuzusetzen. Das britische Patent hat jedoch noch nicht erkannt, das durch Ausnutzung der unterschiedlichen Reaktivität der Isocyanat-Gruppen des unsymmetrischen 2,4-Toluylendiisocyanats in der ersten Reaktionsstufe Prepolymere mit besonders niederem Gehalt an monomerem Toluylendiisocyanat herstellbar sind.

Aufgabe der Erfindung ist es somit ein Verfahren zu schaffen, das es erlaubt, Polyurethan-Prepolymere mit geringem Restmonomergehalt und relativ geringer Viskosität auf Basis von speziellen monocyclischen und dicyclischen Diisocyanaten herzustellen. Eine spezielle Aufgabe der Erfindung ist es, derartige Produkte auf Basis 2,4-Toluylen-diisocyanat/4,4'-Diphenylmethandiisocyanat zur Verfügung zu stellen.

Gegenstand der Erfindung ist somit ein Verfahren zur Herstellung von Polyurethan-Prepolymeren mit endständigen Isocyanatgruppen aus Diisocyanaten unterschiedlicher Reaktivität und mehrfunktionellen Alkoholen, dadurch gekennzeichnet, daß man

- in einem ersten Reaktionsschritt 2,4-Toluylen-diisocyanat mit mehrfunktionellen Alkoholen im Verhältnis OH : NCO zwischen 4 und 0,55 umsetzt und nach Abreaktion praktisch aller schnellen NCO-Gruppen mit einem Teil der vorhandenen OH-Gruppen
- in einem zweiten Reaktionsschritt ein im Vergleich zu den weniger reaktiven NCO-Gruppen des 2,4-Toluylen-diisocyanat aus Reaktionsschritt 1 reaktiveres Diisocyanat äquimolar oder im Überschuß, bezogen auf noch freie OH-Gruppen, zusetzt,

wobei gewünschtenfalls übliche Katalysatoren und/oder erhöhte Temperaturen angewendet werden.

Ein weiterer Gegenstand der Erfindung ist die Verwendung der Verfahrensprodukte, zusammen mit üblichen Härtern und/oder Feuchtigkeit, gewünschtenfalls in Gegenwart von organischen Lösungsmitteln und üblichen Beschleunigern, zum Verkleben von Kunststoffgegenständen, insbesondere Folien, wobei die Verklebung verzugsweise bei Temperaturen zwischen 70 und 120°C stattfindet.

Die Erfindung geht von der Beobachtung aus, daß bei der Reaktion von 2,4-Toluylendiisocyanat mit Alkoholen die Geschwindigkeit der Umsetzung der ersten Isocyanatgruppe wesentlich größer ist als die der zweiten Isocyanatgruppe.

Es ist weiterhin bekannt, daß Polyurethan-Prepolymere mit Isocyanatendgruppen dann eine vergleichsweise niedere Viskosität aufweisen, wenn sie sich von einem Diisocyanat mit unterschiedlich reaktiven NCO-Gruppen, z. B. einem asymmetrischen monocyclischen Diisocyanat, ableiten.

Erfindungsgemäß wird ein mehrfunktioneller Alkohol mit 2,4-Toluylen-diisocyanat im Verhältnis OH : NCO zwischen 4 und 0,55 in einer ersten Reaktionsstufe umgesetzt bis die reaktiveren NCO-Gruppen des Diisocyanats praktisch vollständig mit einem Teil der verfügbaren OH-Gruppen reagiert haben, aber eine Reaktion der weniger reaktiven Gruppen noch nicht oder nicht wesentlich stattgefunden hat. Dieser Reaktionszeitpunkt läßt sich durch analytische Verfolgung des Reaktionsgeschehens bestimmen. Das Reaktionsgeschehen kann dabei spektroskopisch (IR) oder titrimetrisch verfolgt werden. Die Einsatzmolverhältnisse werden nach dem erfindungsgemäßen Verfahren so gewählt, daß nach Abreaktion der reaktiveren Isocyanatgruppen noch freie OH-Gruppen vorliegen.

In das so gewonnene niedrig viskose Reaktionsgemisch der ersten Reaktionsstufe wird dann in der zweiten Reaktionsstufe ein symmetrisches, dicyclisches Diisocyanat gegeben, welches so ausgewählt ist, daß seine Reaktivität höher ist als die der nun polymergebundenen NCO-Gruppen des Toluylendiisocyanats.

Vereinfacht kann gesagt werden, daß nach der Lehre der Erfindung in einem niedrig viskosen Reaktionsmedium, das OH-funktionelle und NCO-funktionelle Bestandteile enthält, eine Reaktion zwischen den OH-funktionellen Bestandteilen und einem symmetrischen Diisocyanat zu einem Polyurethan-Prepolymeren durchgeführt wird.

Im erfindungsgemäßen Verfahren wird das Produkt der ersten Reaktionsstufe als Reaktivverdünner ausgenutzt, ohne daß es zu einer Reaktion zwischen den OH-Gruppen und den langsam reagierenden polymergebundenen NCO-Gruppen aus dem 2,4-Toluylen-diisocyanat käme.

Da einerseits während der zweiten Reaktionsstufe der Restmonomergehalt des Reaktivverdünners weiter absinkt - da das im Reaktivverdünner als Restmonomer enthaltene 2,4-Toluylen-diisocyanat Isocyanatgruppen höherer Aktivität aufweist als der Reaktivverdünner selbst - und andererseits in der zweiten Reaktionsstufe höhermolekulare Prepolymere mit geringem Gehalt an Restmonomeren, die ohne Reaktivverdünner nicht mehr verarbeitbar wären, hergestellt werden können, werden insgesamt Prepolymermischungen mit stark vermindertem Restmonomergehalt erhalten.

In der ersten Stufe des erfindungsgemäßen Verfahrens kann eine Vielzahl von mehrfunktionellen Alkoholen eingesetzt werden. Geeignet sind in dieser Stufe aliphatische Alkohole mit 2 - 4 Hydroxylgruppen pro Molekül. Wenngleich primäre wie auch sekundäre Alkohole eingesetzt werden können, sind die sekundären bevorzugt. So können insbesondere die Umsetzungsprodukte niedermolekularer mehrfunktioneller Alkohole mit Alkylenoxiden mit bis zu 4 C-Atomen eingesetzt werden. Geeignet sind beispielsweise die Umsetzungsprodukte von Ethylenglykol, Propylenglykol, von den isomeren Butandiolen oder Hexandiolen mit Ethylenoxid, Propylenoxid und/oder Butenoxid. Ferner können die Umsetzungsprodukte trifunktioneller Alkohole wie Glycerin, Trimethylolethan und/oder Trimethylolpropan oder höher funktioneller Alkohole wie beispielsweise Pentaerythrit oder Zuckeralkohole mit den genannten Alkenoxiden eingesetzt werden.

Besonders geeignet sind Polyetherpolyole mit einem Molekulargewicht von 100 - 10 000, vorzugsweise 1 000 - 5 000 und insbesondere Polypropylenglykol.

Somit können je nach gewünschtem Molekulargewicht Anlagerungsprodukte von nur wenigen mol Ethylenoxid und/oder Propylenoxid pro mol oder aber von mehr als hundert mol Ethylenoxid und/oder Propylenoxid an niedermolekulare mehrfunktionelle Alkohole eingesetzt werden. Weitere Polyetherpolyole sind durch Kondensation von z. B. Glycerin oder Pentaerythrit unter Wasserabspaltung herstellbar. In der Polyurethan-Chemie gebräuchliche Polyole entstehen weiterhin durch Polymerisation von Tetrahydrofuran. Unter den genannten Polyetherpolyolen sind die Umsetzungsprodukte von mehrfunktionellen niedermolekularen Alkoholen mit Propylenoxid unter Bedingungen, bei denen zumindest teilweise sekundäre Hydroxylgruppen entstehen, besonders geeignet. Weitere geeignete Polyetherpolyole sind z. B. in der deutschen Offenlegungsschrift 2 559 759 beschrieben.

Für das erfindungsgemäße Verfahren sind weiterhin Polyesterpolyole mit einem Molekulargewicht von 200 - 10 000 geeignet. Nach einer ersten Ausführungsform können Polyesterpolyole verwendet werden, die durch Umsetzung von niedermolekularen Alkoholen, insbesondere von Ethylenglykol, Propylenglykol, Glycerin oder Trimethylolpropan mit 1 - 50 mol Caprolacton entstehen. Weitere geeignete Polyesterpolyole sind durch Polykondensation herstellbar. So können difunktionelle und/oder trifunktionelle Alkohole mit einem Unterschuß an Dicarbonsäuren und/oder Tricarbonsäuren oder deren reaktiven Derivaten zu Polyesterpolyolen kondensiert werden. Geeignete Dicarbonsäuren sind hier Bernsteinsäure und ihre höheren Homologen mit bis zu 12 C-Atome, ferner ungesättigte Dicarbonsäuren wie Maleinsäure oder Fumarsäure sowie aromatische Dicarbonsäuren, insbesondere die isomeren Phthalsäuren. Als Tricarbonsäuren sind Zitronensäure oder Trimellitsäure geeignet. Im Sinne der Erfindung besonders geeignet sind Polyesterpolyole aus den genannten Dicarbonsäuren und Glycerin, welche einen Restgehalt an sekundären OH-Gruppen aufweisen.

Um Umsetzungsprodukte von 2,4-Toluylendiisocyanat mit mehrfunktionellen Alkoholen zu erhalten, welche erfindungsgemäß in der zweiten Reaktionsstufe als Lösungsmittel "oder Reaktivverdünner" eingesetzt werden können, ist es wichtig, ein bestimmtes Verhältnis zwischen Hydroxylgruppen und Isocyanatgruppen einzuhalten. So entstehen geeignete Produkte, die nach Abreaktion der reaktiveren NCO-Gruppen noch OH-Gruppen enthalten, wenn die Anzahl der OH-Gruppen geteilt durch die Anzahl der Isocyanatgruppen zwischen 4 und 0,55 eingestellt wird, vorzugsweise zwischen 1 und 0,6.

Zur Durchführung der zweiten Stufe des erfindungsgemäßen Verfahrens werden in den OH- und NCOfunktionellen Reaktionsprodukten der ersten Reaktionsstufe als Reaktivverdünner symmetrische, dicyclische Diisocyanate mit den restlichen OH-Gruppen zur Reaktion gebracht. Die menge der dicyclischen Diisocyanate, bezogen auf die Gesamtmenge der Diisocyanate in Stufe 1 und 2, beträgt 5 - 80 Gew.-%, vorzugsweise 5 - 60 Gew.-% und insbesondere 10 - 40 Gew.-%. Für die Reaktion der zweiten Stufe beträgt das Molverhältnis OH-Gruppen: NCOGruppen, ausgedrückt als Quotient der OH-Gruppen geteilt durch Isocyanatgruppen, bevorzugt 0,5 - 1,0, insbesondere 0,6 - 0,8, bezogen auf restliche OH-Gruppen.

Bei der Auswahl der dicyclischen Diisocyanate ist es wichtig, daß die Reaktivität ihrer Isocyanatgruppen gegenüber Hydroxylgruppen höher liegt als die der endständigen Isocyanatgruppen des Reaktivverdünners. Somit sind in erster Linie Diaryldiisocyanate geeignet. Bevorzugt sind 4,4'-Diphenylmethandiisocyanat und/oder substituierte 4,4'-Diphenylmethandiisocyanate.

Zur Durchführung des erfindungsgemäßen Verfahrens ist es bevorzugt, die Umsetzung der Diisocyanate mit mehrfunktionellen Alkoholen bei erhöhter Temperatur durchzuführen. Geeignet sind Temperaturen zwischen 40 und 100°, vorzugsweise zwischen 80 und 95°C. Bei Laboransätzen (ca. 1 kg) hat sich eine Reaktionszeit von ca. 1 Stunde für die erste Reaktionsstufe und von 2 - 20 Stunden für die zweite Reaktionsstufe als vorteilhaft erwiesen. Die Temperatur betrug dabei ca. 80°C. In jedem Falle ist das Reaktionsende erreicht, wenn die Anzahl der Isocyanatgruppen nicht weiter absinkt. Dies kann analytisch durch Titration der Isocyanatgruppen festgestellt werden und ist beispielsweise nach 2 - 5 Tagen bei Raumtemperatur der Fall.

Die Verfahrensprodukte weisen einen substantiell verminderten Anteil an freiem, monomerem Toluylendiisocyanat aber auch an freien, monomeren dicyclischen Diisocyanaten auf. So tritt bei großflächiger Anwendung der Prepolymeren bei erhöhten Temperaturen, also etwa 80 - 100°C, keine Belästigung durch flüchtiges Toluylendiisocyanat auf. Ein weiterer Vorteil der Verfahrensprodukte ist ihre relativ geringe Viskosität, die sie z. B. für lösungsmittelfreie Klebstoffanwendungen geeignet macht.

Die erfindungsgemäß hergestellten Prepolymeren eignen sich in Substanz oder als Lösung in organischen Lösungsmitteln zum Verkleben von Kunststoffen, insbesondere zum Kaschieren von Kunststoff-Folien. Hierbei können übliche Härter, etwa mehrfunktionelle höhermolekulare Alkohole zugesetzt werden (2-Komponenten-Systeme) oder aber Oberflächen mit definiertem Feuchtigkeitsgehalt mit den erfindungsgemäß erhältlichen Produkten direkt verklebt werden. Mit den erfindungsgemäß erhältlichen Produkten hergestellte Folienverbunde zeigen hohe Verarbeitungssicherheit beim Heissiegeln. Dies ist möglicherweise auf den verminderten Anteil migrationsfähiger niedermolekularer Produkte in den Prepolymeren zurückzuführen.

**Beispiele**

**Beispiel 1**

In einem Dreihalskolben, versehen mit Rührer, Thermometer und Trockenrohr, wurden 411,7 g eines Polypropylenglykols (OHZ 109 mg KOH/g) mit 104,4 g 2,4-Toluylendiisocyanat vermischt und unter Rühren aufgeheizt. Vom Erreichen einer Massetemperatur von 90°C ab war nach einer halben Stunde ein NCO-Titrationswert von 4.56 % erreicht, womit der theoretische Wert von 4,88 % unwesentlich unterschritten war. Nach Zugabe von 25 g 4,4'-Diphenylmethandiisocyanat wurde bei 90°C zwei Stunden lang weitergerührt, wonach ein NCO-Gehalt von 4,61 % (theor. 4.65 %) erreicht war.

% monomeres TDI: 0,085          OH/NCO (1) = 1 : 1,5
% monomeres MDI: 1              OH/NCO (2) = 1 : 1, bezogen
Viskosität: 1510 mPa.s/60°C     auf Rest OH aus Stufe 1

**Beispiel 2**

In der unter 1) beschriebenen Apparatur wurde dieselbe Menge desselben Polyethers mit 69,6 g Toluylendiisocyanat umgesetzt. Bei einer Reaktionstemperatur von 85°C über eine Stunde inklusive Aufheizzeit lag der titrierte NCO-Gehalt mit 3,41 % dicht beim Sollwert von 3,48 %. Nach Zugabe von 80 g MDI und Verrühren blieb die Mischung über Nacht bei 60°C im Trockenschrank stehen.

% monomeres TDI : 0,03          % NCO = 4,7 (theor. 4,77)
% monomeres MDI : 2,5           OH/NCO (1) = 1 : 1
Viskosität: 1980 mPas/60°C      OH/NCO (2) = 1 : 1,6, bezogen auf Rest OH aus Stufe 1

**Beispiel 3**

Wie unter 1) und 2) beschrieben, wurde dieselbe Menge desselben Polyethers mit 87 g 2,4-Toluylendiisocyanat zur Reaktion gebracht. Nach ca.1 1/4 Stunden (inklusive Aufheizzeit) bei 60 - 70°C wurde bei 4,5 % NCO (theoretisch 4,2 %) 50 g MDI zugewogen, zwei Stunden bei 70°C weiteraddiert und über Nacht stehen gelassen. % NCO = 4,59 (theoretisch 4,58)

% monomeres TDI: 0,08           OH/NCO (1) = 1 : 1,25
% monomeres MDI: 1,5            OH/NCO (2) = 1 : 1,333, bezogen
Viskosität: 1390 mPas/60°C      auf Rest OH aus Stufe 1

EP 0 150 444 B1

Das beschriebene Verfahren ist auch auf Polyester anstelle des Polyethers anwendbar, wobei wegen der höheren Reaktionsfähigkeit der primären OH-Gruppen des Polyesters unter milderen Bedingungen gearbeitet werden muß, um den Zeitraum zur Erfassung der Reaktionsstufe 1 zu dehnen.

## Patentansprüche

1. Verfahren zur Herstellung von Polyurethan-Prepolymeren mit endständigen Isocyanatgruppen aus Diisocyanaten unterschiedlicher Reaktivität und mehrfunktionellen Alkoholen, dadurch gekennzeichnet, daß man

- in einem ersten Reaktionsschritt 2,4-Toluylen-diisocyanat in Abwesenheit anderer Diisocyanate mit mehrfunktionellen Alkoholen im Verhältnis OH : NCO zwischen 4 und 0,55 umsetzt und nach Abreaktion praktisch aller höher reaktiven NCO-Gruppen mit einem Teil der vorhandenen OH-Gruppen
- in einem zweiten Reaktionsschritt ein im Vergleich zu den weniger reaktiven NCO-Gruppen des 2,4 Toluylen-diisocyanates aus Reaktionsschritt. 1 reaktiveres symmetrisches, dicyclisches Diisocyanat äquimolar oder im Überschuß, bezogen auf noch freie OH-Gruppen in einer Menge von 5 - 80 Gew.-%, bezogen auf die Gesamtmenge der Diisocyanate in Stufe 1 und 2, zusetzt, wobei gewünschtenfalls übliche Katalysatoren und/oder erhöhte Temperaturen angewendet werden.

2. Verfahren nach Anspruch 1, dadurch gekennzeichnet, daß als mehrfunktionelle Alkohole mehrfunktionell sekundäre Alkohole eingesetzt werden.

3. Verfahren nach den Anspruch 1 und 2, dadurch gekennzeichnet, daß als reaktivere Diisocyanate in Reaktionsschritt 2 aromatische Diisocyanate, insbesondere 4,4'-Diphenylmethandiisocyanat, eingesetzt werden.

4. Verfahren nach den Ansprüchen 1 - 3, dadurch gekennzeichnet, daß im Reaktionsschritt 1 das Molverhältnis OH-Gruppen: NCO-Gruppen zwischen 0,6 und 1,0 eingestellt wird.

5. Verfahren nach den Ansprüchen 1 - 4, dadurch gekennzeichnet, daß im zweiten Reaktionsschritt das Molverhältnis OH-Gruppen: NCO-Gruppen zwischen 0,5 und 1, vorzugsweise zwischen 0,6 und 0,8 eingestellt wird.

6. Verfahren nach den Ansprüchen 1 - 5, dadurch gekennzeichnet, daß als mehrfunktionelle Alkohole primäre oder sekundäre aliphatische Alkohole mit 2 bis 6, vorzugsweise 2 bis 4 Hydroxylgruppen eingesetzt werden.

7. Verfahren nach den Ansprüchen 1 - 6, dadurch gekennzeichnet, daß als mehrfunktionelle Alkohole Diole mit 2 - 5 C-Atomen, Triole mit 3 - 6 C-Atomen, Tetraole mit 4 - 8 C-Atomen, OH-funktionelle Polyester und/oder OH-funktionelle Polyether mit Molekulargewichten bis 10 000, vorzugsweise 1000 - 5000 eingesetzt werden.

8. Verfahren nach den Ansprüchen 1 - 7, dadurch gekennzeichnet, daß die beiden Reaktionsschritte bei Temperaturen zwischen 40 und 100°, vorzugsweise zwischen 80 und 95°C durchgeführt werden.

9. Verwendung der Verfahrensprodukte nach den Ansprüchen 1 - 8 zusammen mit üblichen Härtern und/oder Feuchtigkeit, gewünschtenfalls in Gegenwart von organischen Lösungsmitteln und üblichen Beschleunigern, zum Verkleben von Kunststoffgegenständen, insbesondere Folien.

10. Ausgestaltung nach Anspruch 9, dadurch gekennzeichnet, daß man die Verklebung bei Temperaturen zwischen 70 und 120°C durchführt.

## Claims

1. A process for the production of isocyanate-terminated polyurethane prepolymers based on diisocyanates of different reactivity and polyhydric alcohols, characterized in that

- in a first reaction step carried out in the absence of other diisocyanates, 2,4-tolylene diisocyanate is reacted with polyhydric alcohols in an OH : NCO ratio of from 4 to 0.55 and, after virtually all the more reactive NCO groups have reacted off with some of the OH groups present,
- in a second reaction step, a symmetrical, dicyclic diisocyanate which is more reactive by comparison with the less reactive NCO groups of the 2,4-tolylene diisocyanate used in reaction step 1 is added in an equimolar quantity or in excess, based on free OH groups, and in a quantity of 5 to 80 % by weight, based on the total quantity of diisocyanates in steps 1 and 2, the reactions being carried out, if desired, in the presence of the usual catalysts and/or at elevated temperatures.

5

2. A process as claimed in claim 1, characterized in that polyhydric secondary alcohols are used as the polyhydric alcohols.

3. A process as claimed in claims 1 and 2, characterized in that aromatic diisocyanates, particularly 4,4'-diphenyl methane diisocyanate, are used as the more reactive diisocyanates in reaction step 2.

4. A process as claimed in claims 1 to 3, characterized in that the molar ratio of OH groups to NCO groups in the first stage is adjusted to between 0.6 and 1.0.

5. A process as claimed in claims 1 to 4, characterized in that the molar ratio of OH groups to NCO groups in the second stage is adjusted to between 0.5 and 1 and preferably to between 0.6 and 0.8.

6. A process as claimed in claims 1 to 5, characterized in that primary or secondary aliphatic alcohols containing from 2 to 6 and preferably from 2 to 4 hydroxyl groups are used as the polyhydric alcohols.

7. A process as claimed in claims 1 to 6, characterized in that diols containing from 2 to 5 carbon atoms, triols containing from 3 to 6 carbon atoms, tetraols containing from 4 to 8 carbon atoms, OH functional polyesters and/or OH functional polyethers having molecular weights of up to 10 000 and preferably 1 000 to 5 000 are used as the polyhydric alcohols.

8. A process as claimed in claims 1 to 7, characterized in that both stages of the reaction are carried out at temperatures in the range from 40 to 100°C and preferably at temperatures in the range from 80 to 95°C.

9. The use of the products obtained by the process claimed in claims 1 to 8 together with standard hardeners and/or moisture, optionally in the presence of organic solvents and standard accelerators, for bonding plastics, more especially in the form of films.

10. The use claimed in claim 9, characterized in that bonding is carried out at temperatures in the range from 70 to 120°C.

## Revendications

1. Procédé de préparation de prépolymères de polyuréthane avec des groupes isocyanates terminaux obtenus à partir de diisocyanates de réactivités différentes et d'alcools polyfonctionnels, caractérisé en ce que:

- dans une première étape de réaction on fait réagir du 2,4-toluylènediisocyanate en absence d'autres diisocyanates avec des alcools polyfonctionnels dans le rapport OH : NCO compris entre 4 et 0,55 et après réaction de pratiquement tous les groupes NCO plus réactifs avec une partie des groupes OH présents.
- dans une deuxième étape de réaction on ajoute en quantité équimolaire ou en excès, par rapport aux groupes OH encore libres, un diisocyanate plus réactif dicyclique symétrique que les groupes NCO moins réactifs du 2,4-toluylènediisocyanate en une quantité de 5 - 80 % en poids par rapport à la quantité totale de diisocyanates des étapes 1 et 2, tout en utilisant le cas échéant des catalyseurs usuels et/ou des températures supérieures à l'ambiante.

2. Procédé selon la revendication 1, caractérisé en ce qu'on utilise comme alcools polyfonctionnels des alcools polyfonctionnels secondaires.

3. Procédé selon les revendications 1 et 2, caractérisé en ce qu'on utilise comme diisocyanates plus réactifs dans la deuxième étape réactionnelle des diisocyanates aromatiques, notamment du 4,4'-diphénylméthane-diisocyanate.

4. Procédé selon les revendications 1 à 3, caractérisé en ce que dans l'étape réactionnelle 1 le rapport molaire des groupes OH aux groupes NCO est ajusté entre 0,6 et 1,0.

5. Procédé selon les revendications 1 à 4, caractérisé en ce que dans la deuxième étape réactionnelle le rapport molaire groupes OH : groupes NCO est ajusté entre 0,5 et 1, de préférence entre 0,6 et 0,8.

6. Procédé selon les revendications 1 à 5, caractérisé en ce qu'on utilise comme alcools polyfonctionnels des alcools aliphatiques primaires ou secondaires avec 2 à 6, de préférence 2 à 4 groupes hydroxyles.

7. Procédé selon les revendications 1 à 6, caractérisé en ce qu'on utilise comme alcools polyfonctionnels des diols avec 2 - 5 atomes de C, des triols avec 3 - 6 atomes de C, des tétraols avec 4 - 8 atomes de C, des polyesters à OH fonctionnels et/ou des polyéther à Oh fonctionnels avec des poids moléculaires jusqu'à 10 000, de préférence 1000 - 5000.

8. Procédé selon les revendications 1 à 7, caractérisé en ce que les deux étapes réactionnelles sont conduites à des températures comprises entre 40 et 100°, de préférence entre 80 et 95°C.

9. Utilisation des produits du procédé selon les revendications 1 à 8 avec les durcisseurs usuels et/ou l'humidité, si c'est souhaité en présence de solvants organiques et des accélérateurs usuels, pour coller des objets en matière plastique, notamment des films.

10. Opération selon la revendication 9, caractérisée en ce qu'on réalise le collage à des températures comprises entre 70 et 120°C.